## Europäisches Patentamt
## European Patent Office
## Office européen des brevets

(11) Veröffentlichungsnummer: **0 090 061**
**A1**

# EUROPÄISCHE PATENTANMELDUNG

(21) Anmeldenummer: 82102598.8

(22) Anmeldetag: 27.03.82

(51) Int. Cl.³: **G 05 B 19/42,** B 66 C 1/12

(43) Veröffentlichungstag der Anmeldung: 05.10.83
Patentblatt 83/40

(71) Anmelder: **Emmerich, Johannes,**
**Kelsterbacherstrasse 2, D-6000 Frankfurt a.M. (DE)**

(72) Erfinder: **Emmerich, Johannes, Kelsterbacherstrasse 2,**
**D-6000 Frankfurt a.M. (DE)**

(74) Vertreter: **Reichel, Wolfgang, Dipl.-Ing. et al, Reichel und**
**Reichel Parkstrasse 13, D-6000 Frankfurt am Main 1 (DE)**

(84) Benannte Vertragsstaaten: **BE DE FR GB NL**

(54) **Verfahren zum Wenden bzw. Manipulieren asymmetrischer Werkstücke und Wendetraverse zur Durchführung des Verfahrens.**

(57) Das Verfahren sieht vor, daß ein erster Wendevorgang eines asymmetrischen Werkstücks von einem Handtaster gesteuert und mit reduzierter Geschwindigkeit ausgeführt wird, so daß die dazu abgegebenen Steuersignale exakt und fehlerfrei abgegeben werden können, und daß diese Steuersignale aufgezeichnet und gespeichert werden und weitere Wendevorgänge asymmetrischer Werkstücke mit im wesentlichen gleicher Form automatisch mit unreduzierter Geschwindigkeit steuern können. Die Wendetraverse zur Durchführung des Verfahrens weist einen Feingang für alle Motoren zur Reduzierung deren Arbeitsgeschwindigkeit und eine Steuereinrichtung für die Motoren auf, die die von dem Handtaster abgegebenen Steuersignale aufzeichnen und speichern und einen so aufgezeichneten und gespeicherten Wendevorgang automatisch reproduzieren kann.

Johannes Emmerich, D-6000 Frankfurt am Main

Verfahren zum Wenden bzw. Manipulieren
asymmetrischer Werkstücke und Wendetraverse
zur Durchführung des Verfahrens

Die Erfindung betrifft ein Verfahren zum Wenden
bzw. Manipulieren asymmetrischer Werkstücke mit Hilfe
einer Wendetraverse mit endlosen, von Wendemotoren
antreibbaren, an vertikal und horizontal verschiebbaren Bandstationen getragenen Tragbändern, die von
einem Handtaster steuerbar ist. Die Erfindung betrifft
ferner eine Wendetraverse zur Durchführung des Verfahrens.

Wendetraversen werden zum Wenden bzw. zum Manipulieren von insbesondere schweren und unhandlichen Werkstücken beliebiger Form und Größe und mit beliebiger
Schwerpunktlage verwendet. Dabei haben sich Wendetraversen bewährt, die drei Gruppen von Antriebsmotoren
aufweisen: die endlosen Tragbänder, die über von Bandstationen getragene Bandrollen laufen, werden jeweils
von einem Wendemotor angetrieben, während jede Bandstation ihrerseits von je einem Motor vertikal und
horizontal verstellbar ist.

Zum Wenden bzw. Manipulieren eines asymmetrischen
Werkstücks müssen alle drei Gruppen von Motoren gesteuert
werden. Vor dem Anheben des Werkstücks werden zunächst
die Bandstationen horizontal verstellt, wodurch der Abstand zwischen den Tragbändern auf die Abmessungen des
anzuhebenden Werkstücks eingestellt wird. Das von den so
eingestellten Tragbändern umschlungene Werkstück wird
anschließend angehoben, woraufhin sich normalerweise eine Schräglage der Traverse einstellt, da der Schwerpunkt des angehobenen Werkstücks im allgemeinen nicht mit dem Aufhängepunkt der Wendetraverse fluchtet. Infolgedessen sind in diesem Fall die Bandstationen so lange horizontal zu verschieben, bis die Wendetraverse eine horizontale Lage einnimmt. Anschließend ist das angehobene Werkstück selbst horizontal auszurichten, indem eine oder beide Bandstationen vertikal verfahren werden. Dann wird der Wendevorgang initiiert, in dessen Verlauf ständig Vertikalbewegungen der Bandstationen zu steuern und ein Drehzahlausgleich der Wendemotoren auszuführen ist, um die Geschwindigkeitsdifferenz der Tragbänder infolge der asymmetrischen Kontur des Werkstücks auszugleichen, wobei das Werkstück in seiner horizontalen Lage zu halten ist.

Diese Bewegungsabläufe werden bisher von einer Bedienungsperson über ein Handsteuergerät bzw. einen Handtaster gesteuert. Dazu ist eine extrem hohe Aufmerksamkeit und Geschicklichkeit seitens der Bedienungsperson erforderlich, da die Bewegungsabläufe in schneller Folge und teilweise sogar gleichzeitig erfolgen müssen. Es ergibt sich dabei häufig die Notwendigkeit, den Wendevorgang zu unterbrechen, um einzelne Bewegungsabläufe zu korrigieren, da der Wendevorgang schneller abläuft als die dabei erforderlichen Bewegungsabläufe von der Bedienungsperson gesteuert werden können. Durch das Unterbrechen des Wendevorgangs wird der Arbeitstakt erheblich verlangsamt. Wenn die Bedienungsperson versucht, den Wendevorgang durch eine raschere Folge von Steuersignalen zu beschleunigen, so birgt dies wegen des komplizierten Steuervorganges eine erhebliche Unfallgefahr in sich, da die zu manipulierenden Werkstücke ein Gesamtgewicht bis über 100 t haben können.

Der Erfindung liegt die Aufgabe zugrunde, ein Verfahren zum Wenden bzw. Manipulieren asymmetrischer Werkstücke anzugeben, bei dem alle Bewegungsabläufe schnell und exakt ausgeführt werden, so daß der Wendevorgang in kürzerer Zeit und mit erheblich größerer Sicherheit ausgeführt werden kann. Ferner soll eine Wendetraverse zur Durchführung des Verfahrens angegeben werden.

Diese Aufgabe wird erfindungsgemäß durch die Merkmale der Patentansprüche 1 und 6 gelöst.

Das erfindungsgemäße Verfahren sieht vor, daß ein erster Wendevorgang eines asymmetrischen Werkstücks von dem Handtaster gesteuert mit reduzierter Geschwindigkeit ausgeführt wird, so daß die Bedienungsperson die erforderlichen Steuerungsvorgänge sicher und fehlerlos ausführen kann. Die dabei abgegebenen Steuersignale werden aufgezeichnet und gespeichert und für weitere Wendevorgänge asymmetrischer Werkstücke mit im wesentlichen gleicher Form als Wendeprogramm bzw. Manipulierprogramm verwendet, um deren Wendevorgang automatisch mit unreduzierter Geschwindigkeit zu steuern. Diese weiteren Wendevorgänge werden somit über exakte Steuersignale mit im Gegensatz zur Handsteuerung erheblich erhöhter Geschwindigkeit ausgeführt. Dabei wird für jeden Werkstücktyp ein zugehöriger von Hand gesteuerter Wendevorgang als Steuerprogramm aufgezeichnet.

Zweckmäßigerweise können die von dem Handtaster gesteuerten Bewegungsabläufe der Wendetraverse in ihrer Geschwindigkeit auf ein jeweils zur Erzielung einer korrekten Steuerung geeignetes Maß reduziert werden. Dadurch ist sichergestellt, daß jeder einzelne Bewegungsablauf vollständig feherlos und exakt gesteuert werden kann.

0090061

Die Steuersignale werden vorzugsweise durch Messen der jeweiligen Motorwellenzapfendrehung inkremental erfaßt und gespeichert. Die erfaßten und gespeicherten Steuersignale reproduzieren den Wendevorgang derart, daß die Geschwindigkeiten der einzelnen Bewegungsabläufe proportional vervielfacht sind. Dabei kann es zweckmäßig sein, daß der von den Steuersignalen reproduzierte Wendevorgang in bis zu 20 Arbeitsschritte aufgeteilt bzw. aufgerastert wird. Das Werkstück kann dadurch jeweils so weit gedreht oder ev. geneigt werden, daß der jeweils folgende Bearbeitungsgang am Werkstück ausgeführt werden kann.

Die erfindungsgemäße Wendetraverse zur Durchführung des Verfahrens ist mit einem Feingang der Wendemotoren und der Motoren für die horizontale und die vertikale Verschiebung der Bandstationen zur Reduzierung deren Arbeitsgeschwindigkeiten ausgestattet und enthält eine weitere Steuereinrichtung für die Motoren, die die von dem Handtaster abgegebenen Steuersignale aufzeichnen und speichern und einen so aufgezeichneten und gespeicherten Wendevorgang automatisch reproduzieren kann.

Durch das erfindungsgemäße Verfahren und die erfindungsgemäße Wendetraverse können Werkstücke asymmetrischer Form mit großer Geschwindigkeit manipuliert werden, wodurch eine erhebliche Produktionssteigerung erzielbar ist. Da das Steuerprogramm zu einem einmal derart erfaßten Werkstück jederzeit abrufbar ist, können die Rüstzeiten bei der Bearbeitung der Werkstücke beträchtlich gesenkt werden. Ein weiterer wesentlicher Vorteil der Erfindung ist in der Steigerung der Unfallsicherheit zu sehen, die eine Folge des Ausschaltens jeglicher Bedienungsfehler ist.

Weitere Merkmale, Vorteile und Einzelheiten der Erfindung ergeben sich aus der nachfolgenden Beschreibung einer bevorzugten Ausführungsform der Wendetraverse sowie an Hand der Zeichnung. Dabei zeigen:

F i g . 1 eine Ansicht einer Wendetraverse gemäß der Erfindung und

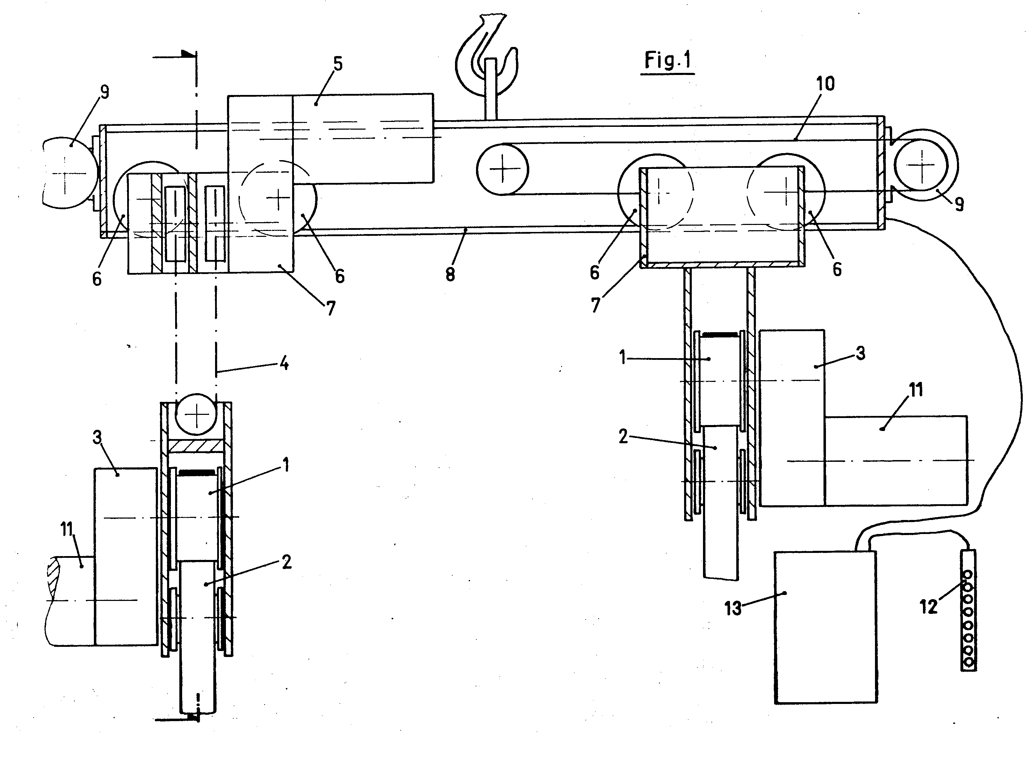

F i g . 2 eine teilweise geschnittene Seitenansicht der Wendetraverse entlang der Linie A-A in Fig. 1.

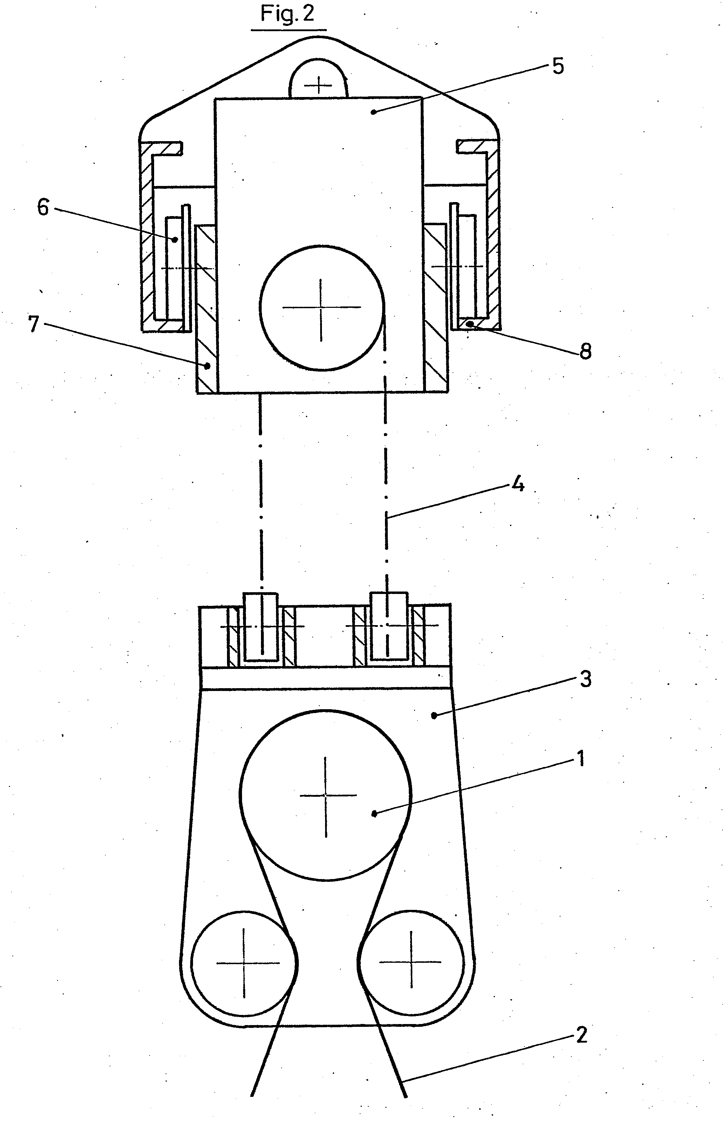

Die in den Fig. 1 und 2 dargestellte Wendetraverse hat zwei Bandrollen 1, über die jeweils ein endloses Tragband 2 läuft. Die Bandrollen 1 sind drehbar auf Bandstationen 3 gelagert, von denen eine über Kette 4 vertikal verstellbar ist, wobei die Kette von einem Motor 5 angetrieben wird.

Der Motor 5 und die Kette 4 sind jeweils an einer mit Rollen 6 versehenen Tragkonstruktion 7 befestigt, die auf dem Unterflansch 8 der Wendetraverse horizontal verschiebbar sind. Die Tragkonstruktionen 7 sind durch Verstellmotoren 9 horizontal verschiebbar, und zwar über Rollenketten 10, die auf die Tragkonstruktionen 7 einwirken.

Die Bandrollen 1 und mit ihnen die Tragbänder 2 sind über Wendemotoren 11 antreibbar, die an den Bandstationen 3 angebracht sind. Sämtliche Motoren sind mit einem Feingang ausgestattet, so daß von einem Handtaster 12 gesteuerte Bewegungsabläufe mit reduzierter Geschwindigkeit ausgeführt werden können. Die Wendetraverse weist ferner eine Steuereinrichtung 13 für die Motoren auf, die die von dem Handtaster 12 abgegebenen Steuersignale aufzeichnen und speichern und einen so aufge - zeichneten und gespeicherten Wendevorgang eines Werk - stückes    automatisch mit unreduzierter Geschwindigkeit reduzieren kann.

0090061

Johannes Emmerich, D-6000 Frankfurt am Main

Patentansprüche
----------------------

1. Verfahren zum Wenden bzw. Manipulieren asymmetrischer Werkstücke mit Hilfe einer Wendetraverse mit endlosen, von Wendemotoren antreibbaren, an vertikal und horizontal verschiebbaren Bandstationen getragenen Tragbändern, die von einem Handtaster steuerbar ist, d a d u r c h   g e k e n n z e i c h n e t , daß ein erster Wendevorgang eines asymmetrischen Werkstücks von dem Handtaster gesteuert mit reduzierter Geschwindigkeit ausgeführt wird, daß die dabei abgegebenen Steuersignale aufgezeichnet und gespeichert werden und daß diese Steuersignale weitere Wendevorgänge asymmetrischer Werkstücke mit im wesentlichen gleicher Form automatisch mit unreduzierter Geschwindigkeit steuern können.

2. Verfahren nach Anspruch 1, d a d u r c h   g e k e n n z e i c h n e t , daß die von dem Handtaster gesteuerten Bewegungsabläufe der Wendetraverse in ihrer Geschwindigkeit auf ein jeweils zur Erzielung einer korrekten Steuerung geeignetes Maß reduziert werden können.

3. Verfahren nach Anspruch 1, d a d u r c h   g e k e n n z e i c h n e t , daß die Steuersignale durch Messen der jeweiligen Motorwellenzapfendrehung inkremental erfaßt und gespeichert werden.

4.    Verfahren nach einem der Ansprüche 1 bis 3,
d a d u r c h    g e k e n n z e i c h n e t ,
daß die erfaßten und gespeicherten Steuersignale derart
den Wendevorgang reproduzieren, daß die Geschwindigkeiten der einzelnen Bewegungsabläufe vervielfacht sind.

5.    Verfahren nach einem der Ansprüche 1 bis 4,
d a d u r c h    g e k e n n z e i c h n e t ,
daß der von den Steuersignalen reproduzierte Wendevorgang in bis zu 20 Arbeitsschritte aufgeteilt werden
kann.

6.    Wendetraverse zur Durchführung des Verfahrens nach
einem der Ansprüche 1 bis 5,
g e k e n n z e i c h n e t    d u r c h
einen Feingang der Wendemotoren(11) und der Motoren
(5) für die horizontale und die vertikale Verschiebung
der Bandstationen(3) zur Reduzierung deren Arbeitsgeschwindigkeiten und eine Steuereinrichtung für die
Motoren, die die von dem Handtaster (12) abgegebenen
Steuersignale aufzeichnen und speichern und einen so
aufgezeichneten und gespeicherten Wendevorgang automatisch reproduzieren kann.

----------

Fig.1

1/2

0090061

0090061

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 405 285 (L.M.S.B. BARTHELEMY, M.H. FRAIZE) * Insgesamt * | 1,6 | G 05 B 19/42 B 66 C 1/12 |
| | --- | | |
| Y | FR-A-2 311 630 (KOBE STEEL) * Insgesamt * | 1-4,6 | |
| | --- | | |
| Y | US-A-3 460 044 (V. MILENKOVIC; AMERICAN MACHINE FOUNDRY CO.) * Zusammenfassung; Spalte 20, Zeilen 41-48 * | 1,2,4 | |
| | --- | | |
| A | DE-A-2 752 436 (EMMERICH, J.) * Insgesamt * | 1,6 | |
| | ----- | | |

RECHERCHIERTE SACHGEBIETE (Int. Cl. ³)

G 05 B
B 23 Q
B 23 B
B 21 B
B 27 B
B 66 C

Der vorliegende Recherchenbericht wurde für alle Patentansprüche erstellt.

| Recherchenort DEN HAAG | Abschlußdatum der Recherche 22-03-1983 | Prüfer CORNILLIE O.A.R. |
|---|---|---|